Europäisches Patentamt

European Patent Office

Office européen des brevets

(11) Veröffentlichungsnummer: **0 230 923 B1**

(12) **EUROPÄISCHE PATENTSCHRIFT**

(45) Veröffentlichungstag der Patentschrift: **09.12.92**

(21) Anmeldenummer: **87100507.0**

(22) Anmeldetag: **16.01.87**

(51) Int. Cl.5: **H04B** **1/66,** H04K 3/00

(54) **Empfänger für bandgespreizte Signale.**

(30) Priorität: **21.01.86 DE 3601576**

(43) Veröffentlichungstag der Anmeldung:
**05.08.87 Patentblatt  87/32**

(45) Bekanntmachung des Hinweises auf die
Patenterteilung:
**09.12.92 Patentblatt  92/50**

(84) Benannte Vertragsstaaten:
**BE CH DE FR GB IT LI NL**

(56) Entgegenhaltungen:
**EP-A- 0 155 776**
**EP-A- 0 169 520**
**FR-A- 2 377 124**
**US-A- 4 426 712**

**NTC'83, IEEE 1983 NATIONAL TELESYSTEMS**
**CONFERENCE, San Fransisco, California,**
**14.-16. November 1983, Seiten 138-142, IEEE,**
**New York, US; A.J. VAN DIERENDONCK: "Low**
**cost GPS receiver design considerations"**

(73) Patentinhaber: **Alcatel SEL Aktiengesellschaft**
**Lorenzstrasse 10**
**W-7000 Stuttgart 40(DE)**

(72) Erfinder: **Beier, Wolfgang**
**Alte Renninger Strasse 123**
**W-7252 Weil der Stadt(DE)**

(74) Vertreter: **Schmidt, Werner, Dipl.-Phys. et al**
**Alcatel SEL AG Patent- und Lizenzwesen**
**Postfach 30 09 29**
**W-7000 Stuttgart 30(DE)**

## Beschreibung

Die Erfindung geht aus von einem Empfänger für bandgespreizte Signale. Bandgespreizte Signale sind Signale, bei denen ein hochfrequenter Träger mit einem pseudo-statistischen Kode (nachfolgend PRC genannt) kodiert ist. Dieser Kode zur Spektrumsspreizung ist mit einem Modulationssignal, das zur Datenübertragung dient, moduliert. Das Modulationssignal ist häufig ebenfalls ein digitales Signal. In diesem Fall ist also einem ersten digitalen Signal - dem PRC - zur Datenübertragung ein weiteres digitales Signal überlagert. Die Taktfrequenz für die beiden digitalen Signale sind im allgemeinen stark unterschiedlich.

Im Empfangsgerät ist der PRC, der sendeseitig zur Bandspreizung verwendet wird, gespeichert. Weiterhin ist im Empfangsgerät ein Taktgenerator vorhanden, der ein Taktsignal abgibt, das das Auslesen des Kodes aus einem Speicher steuert. Die Phase des Taktsignals muß so geregelt werden, daß der im Empfänger gespeicherte PRC und der PRC des empfangenen Signals zeitlich koinzident auftreten. Aus der Phasenverschiebung zwischen empfangenem und gespeichertem PRC kann die Entfernung des Empfängers von der Sendestation ermittelt werden.

Systeme, bei denen bandgespreizte Signale verwendet werden, sind beispielsweise das JTIDS (Joint Tactical Information Distribution System) und das GPS (Global Positioning System).

Das GPS ist in Navigation, Journal of the Institute of Navigation, Band 25, Nr. 2, Sommer 1978, Seiten 121 bis 146, "GPS Signal Structure and Performance Chracteristics" von J.J. Spilker jr. beschrieben.

Auf den Seiten 139 bis 146 der GPS-Veröffentlichung sind Empfänger für bandgespreizte Signale beschrieben. Die Realisierung dieser Empfänger ist aber sehr aufwendig.

Ein weiterer Empfänger dieser Art wird in der europäischen Patentanmeldung EP-A-0 155 776 beschrieben. Hier erfolgt eine Digitalisierung der I- und Q-Anteile in zwei getrennten Kanälen.

Ein Empfänger für modulierte bandgespreizte Signale ist auch in der älteren europäischen Nachanmeldung EP-A-0 169 520 beschrieben, die am 29.01.1986 veröffentlicht wurde und auf die ältere deutsche Anmeldung P 34 27 058.2 zurückgeht. Dieser Empfänger ist technisch einfach zu realisieren, wobei ein sehr hoher Integrationsgrad möglich ist.

Ein großer Teil der Funktionen kann von einem Rechner durchgeführt werden. Die Realisierung des HF-Teils erfordert nur einen geringen Aufwand. Insbesondere sind keine Frequenz- und Amplitudenregelungen erforderlich. Der Empfänger kann auf einfache Weise so erweitert werden, daß er im Zeitmultiplex mit mehreren Satelliten Verbindung aufnehmen kann, was insbesondere dann erforderlich ist, wenn er als GPS-Empfänger realisiert ist. Der hierzu zusätzlich erforderliche Aufwand ist sehr gering.

Bei der in der älteren Anmeldung beschriebenen Lösung erfolgt eine Digitalisierung des empfangenen Signals dergestalt, daß abhängig von bestimmten Kriterien das digitale Signal einen ersten oder einen zweiten Wert aufweist. Ein solcher Empfänger ist beispielsweise für den C/A-Kode des GPS-Systems geeignet.

Aufgabe der Erfindung ist es, einen Empfänger mit den Eigenschaften des in der älteren Anmeldung beschriebenen Empfängers so auszugestalten, daß er auch für die Verarbeitung des P-Kodes des GPS-Systems geeignet ist.

Abgesehen davon, daß der neue Empfänger sowohl zur Verarbeitung des C/A-Kodes als auch des P-Kodes geeignet ist, ist bei ihm der Signalverlust verglichen mit dem in der älteren Anmeldung beschriebenen Empfänger geringer.

Die Erfindung wird anhand der Zeichnungen beispielsweise näher erläutert. Es zeigt:

Fig. 1a bis c     Diagramme zur Erläuterung eines bandgespreizten Signals,

Fig. 2     ein Blockschaltbild des neuen Empfängers, und

Fig. 3a bis c     Diagramme von Signalen zur Erläuterung der Funktionsweise des Empfängers.

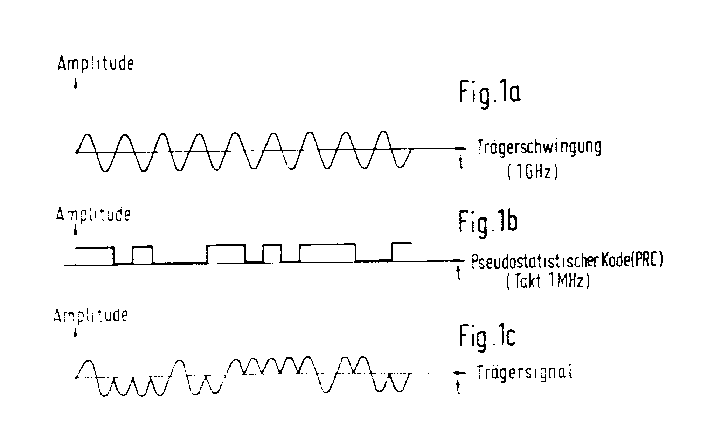

Zur Erzeugung eines bandgespreizten Signals wird eine hochfrequente Trägerschwingung (Fig. 1a), die beispielsweise eine Frequenz von 1 GHz hat, mit einem pseudostatistischen Kode PRC (Fig. 1b), der aus den Signalen "0" und "1" besteht und eine Taktfrequenz von beispielsweise 1 MHz hat, moduliert. Abhängig davon, ob der PRC eine "0" oder "1" aufweist, bleibt die Phase der Trägerschwingung unverändert oder sie wird um 180° verschoben. Das so erzeugte Signal (Fig. 1c) wird nachfolgend als Trägersignal bezeichnet.

Dieses Signal kann bei dem GPS zur Entfernungsmessung verwendet werden.

Regelt man die Phase des im Empfänger gespeicherten PRC so, daß die beiden PRC wieder zeitlich koinzident sind, kann in an sich bekannter Weise die Entfernung ermittelt werden.

Falls mittels des bandgespreizten Signals Daten übertragen werden sollen, dann wird hierzu das Trägersignal mit dem die Daten enthaltenden Signal moduliert. Das Modulationssignal kann ebenfalls ein digitales Signal sein. In diesem Fall wird dem digitalen PRC ein weiteres digitales Signal überlagert. Die Taktfrequenzen der beiden digitalen Signale sollen sich vorzugsweise deutlich voneinander unterscheiden. Taktfrequenzen von 1 MHz und 50 Hz sind geeignete Werte.

Ein bekanntes System, bei dem bandgespreizte Signale verwendet werden, ist, wie bereits erwähnt, das GPS. Bei dem GPS erfolgt sowohl eine Entfernungsmessung als auch eine Datenübertragung.

In einem bekannten GPS-Empfänger, wie er beispielsweise aus der zitierten Literaturstelle bekannt ist, erfolgt eine Regelung der Phasenlage des gespeicherten PRC. Hierzu ist beispielsweise eine sogenannte $\tau$-dither-Regelschleife oder eine early/late-Regelschleife vorgesehen. Weiterhin ist eine Costas-Regelschleife vorgesehen, in der I- und Q- Anteile des modulierten Trägersignals (nach geeigneter Signalverarebeitung; z. B. Umsetzen in die ZF-Lage) gebildet werden und in der das Modulationssignal zurückgewonnen wird.

Bei dem neuen Empfänger sind die Regelkriterien dieselben wie bei einem bekannten Empfänger, jedoch unterscheidet er sich von den bekannten wesentlich bei seiner Realisierung. Da die Regelkriterien an sich bekannt sind, wird hierauf in der nachfolgenden Beschreibung nicht näher eingegangen.

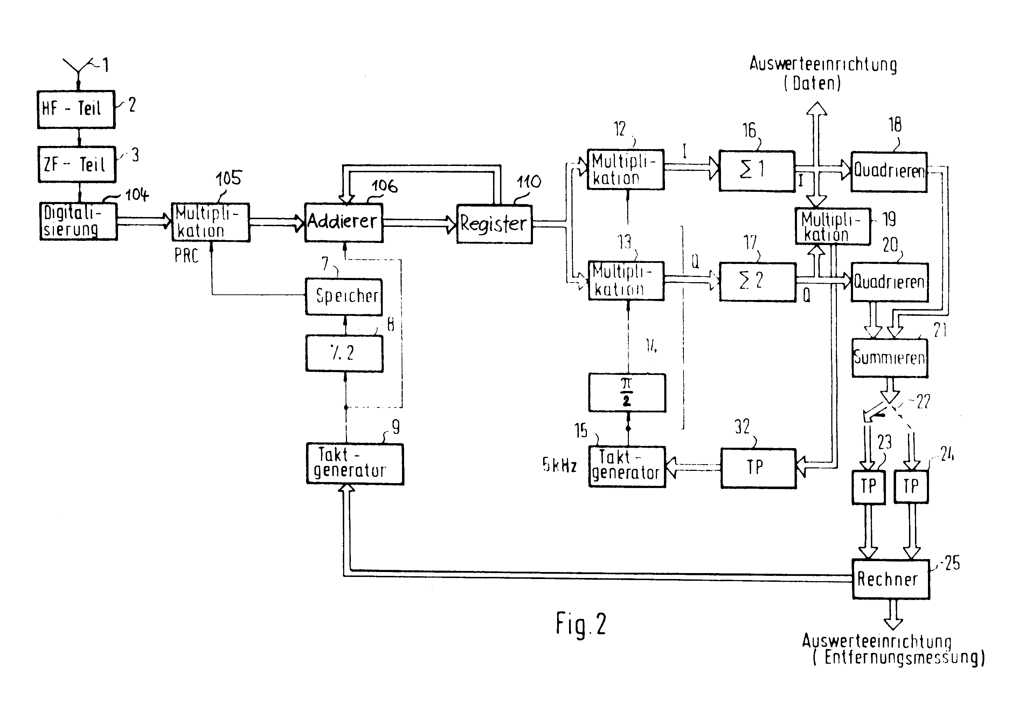

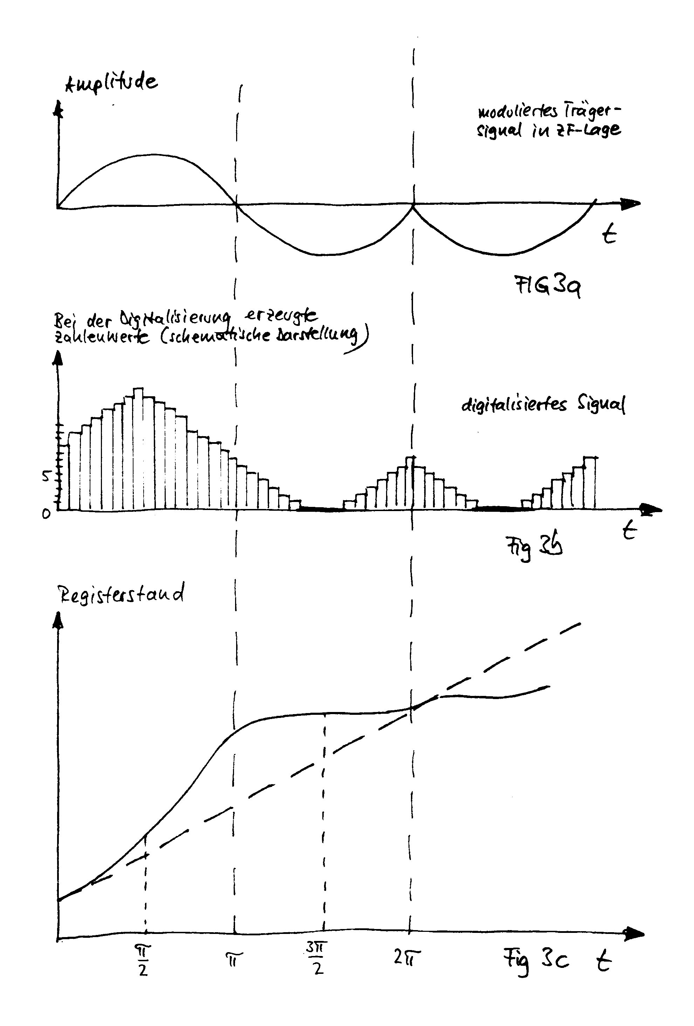

Die Beschreibung erfolgt nachfolgend anhand der Fig. 2 und 3. Das Signal wird von einer Antenne 1 empfangen und einem HF-Teil 2 zugeführt. In einem diesem nachgeschalteten ZF-Teil 3 erfolgt eine Frequenzumsetzung auf 5 kHz. Die ZF-Frequenz ist so gewählt, daß sie auch dann noch ungleich null ist, wenn die maximal zu erwartende Dopplerverschiebung auftritt. Das ZF-Signal wird in einer Digitalisierungsschaltung 104 digitalisiert.

Die Digitalisierungsschaltung (104) teilt den Amplitudenbereich der zu digitalisierenden Signale (positive und negative Amplituden) in mehrere untereinander gleiche Teilbereiche ein.

Die Teilbereiche schließen lückenlos aneinander an. Jedem Teilbereich wird eine bestimmte Zahl zugeordnet und zwar so, daß dem Teilbereich mit den größten positiven Amplituden die höchste Zahl und dem mit den größten negativen Amplituden die (niedrigste) Zahl 0 zugeordnet wird.

Die Digitalisierung kann z. B. in 4 bit erfolgen. Dann erhält man 16 Zahlenwerte.

Das empfangene und mit den Daten modulierte Trägersignal ist von einem Rauschsignal überlagert, dessen Amplitude um ca. 20 dB über der des modulierten Trägersignals liegt. Ist kein Trägersignal vorhanden, dann ist die Verteilung der Häufigkeit der durch die Digitalisierung erzeugten Signale symmetrisch zu der Zahl mit dem mittleren Wert. Dieses digitalisierte Signal wird in einer Multiplikationseinrichtung 105 mit dem PRC multipliziert. Der bei der Multiplikation erzeugte Zahlenwert wird in einem Addierer 106 zu dem jeweils zuletzt in einem dem Addierer 106 nachgeschalteten Register 110 gespeicherten Zahlenwert addiert. Die zeitliche Folge der Additionen ist angenähert doppelt so groß wei die Taktfrequenz des Bandspreizungskodes.

Das Signal weist nach der Multiplikationseinrichtung 105 dann keine Gleichverteilung der Häufigkeit der Zahlenwerte mehr auf, wenn das Trägersignal, mit oder ohne Modulationssignal zur Datenübertragung, vorhanden ist. Die Verteilung der Häufigkeit der Zahlenwerte ändert sich dann mit der ZF-Frequenz des Trägersignals (Fig 3a und 3b), d. h. mit 5 kHz, wenn das empfangene Signal keiner Dopplerverschiebung unterworfen ist, oder mit einer Frequenz zwischen 500 Hz und 9,5 kHz bei den zu erwartenden Dopplerfrequenzen.

Die durch Addition erzeugten Zahlenwerte werden jeweils dem Register 110 zugeführt. Nachdem der maximale Wert des Registers erreicht wurde, tritt ein Überlauf auf. Der dadurch verursachte Sprung bei den Zahlenwerten stört die weitere Auswertung nicht. Falls kein Trägersignal vorhanden ist, nimmt der Zählerstand - wie in der Fig. 3c gestrichelt dargestellt - linear zu, während dann, wenn ein Trägersignal, mit oder ohne Modulationssignal, vorhanden ist, der zeitliche Verlauf (in der Fig. 3c durch ausgezogene Linie dargestellt) des Registerstandes eine Linie ergibt, deren Steigung abwechselnd größer und kleiner als diejenige der gestrichelten Linie ist. Diese Registerstände werden kontinuierlich zwei Multiplikationseinrichtungen 12 und 13 zugeführt. Diese Multiplikationseinrichtungen erhalten jeweils ein in einem Taktgenerator 15 erzeugtes Signal, das aus einer regelmäßigen Folge von "+1" und "-1" besteht. Die Taktfrequenz ist gleich der ZF-Frequenz, d. h. in ihr ist - soweit vorhanden - die Dopplerverschiebung enthalten. Das Signal für die Multiplikationseinrichtung 13 ist gegenüber dem Signal für die Multiplikationseinrichtung 12 um eine viertel Periode des ZF-Signals verschoben. Die Ausgangssignale der beiden Multiplikationseinrichtungen entsprechen den erwähnten I- und Q-Anteilen der Signale wie sie auch bei den bekannten Empfängern erzeugt werden und diese werden auch hier bei dem neuen Empfänger zur Erzeugung von Regelsignalen verwendet.

In Summierschaltungen 16 und 17 wird jeweils für jede Periode des im Taktgenerator 15 erzeugten Taktsignals je ein Summenwert gebildet, und zwar die Summen

$$I = -Z(0) + 2Z(\pi) - Z(2\pi) \text{ und}$$
$$Q = -Z(0) + 2Z\left(\tfrac{\pi}{2}\right) - 2Z\left(\tfrac{3\pi}{2}\right) + Z(2\pi),$$

wobei die Summanden jeweils die Registerstände zu den in den Klammern angegebenen Zeitpunkten sind. In der Fig. 2 sind die Steuerleitungen, die gewährleisten, daß die Registerstände zu den gewünschten Zeitpunkten weiterverarbeitet werden, nicht dargestellt, da es fachmännisches Wissen ist, die anhand der Fig. 2 dargestellte Schaltung bei Kenntnis ihrer Funktion entsprechend zu ergänzen.

In einer Multiplikationseinrichtung 19 werden die Summen I und Q miteinander multipliziert und die durch die Multiplikation erzeugten Werte werden einem digitalen Tiefpaß 32 zugeführt. Das Ausgangssignal dieses Tiefpasses 32 regelt die Frequenz und die Phase des Taktgenerators 15 so, daß dessen Ausgangssignal gleichphasig und gleichfrequent zu dem in die ZF-Lage umgesetzten Trägersignal ist. Durch die Multiplikationseinrichtungen 12, 13, 19, die Summierschaltungen 16, 17, den Tiefpaß 32, den Taktgenerator 15 und die Phasenverschiebungseinrichtung 14 wird eine Costas-Regelschleife gebildet. Im eingeregelten Zustand gibt die Folge der von der Summierschaltung 16 angegebenen Zahlenwerte I das Modulationssignal wieder, aus dem in an sich bekannter Weise in einer (nicht dargestellten) Auswerteeinrichtung die mittels des Modulationssignals übertragenen Daten gewonnen werden.

Die Werte I und Q werden nicht nur der Multiplikationsschaltung 19, sondern auch Quadrierschaltungen 18 und 20 zugeführt, in denen diese Werte jeweils quadriert werden. Die Quadrate dieser Werte werden in einer Summierschaltung 21 summiert und die Summenwerte, die ein Abbild der Amplitude des Trägersignals sind, werden alternierend (22) einem ersten 23 und einem zweiten 24 digitalen Tiefpaß zugeführt. Das Umschalten erfolgt in dem Takt, mit dem die zeitliche Lage des Auslesens des PRC aus dem Speicher 7 umgeschaltet wird (Dither-Frequenz; 125 Hz). Die Ausgangssignale der Tiefpässe 23, 24 werden einem Rechner 25 zugeführt, in dem die Summen und die Differenzen dieser Werte berechnet werden. Daraus wird in an sich bekannter Weise ein Regelsignal ermittelt, das die Phase des in einem Taktgenerator 9 erzeugten Taktsignals, das (nach Teilung des Taktes durch zwei in einem Teiler 8) das Auslesen des PRC aus dem Speicher 7 steuert. Das Taktsignal des Taktgenerators 9 ist außerdem das Taktsignal für den Addierer 106. Die Phasenregelung erfolgt so, daß der im Empfänger gespeicherte PRC dieselbe Phasenlage wie der PRC des empfangenen Signals aufweist. Die zeitliche Lage des PRC, bezogen auf eine Referenzzeit, ist proportional zur Entfernung des Empfängers zur Sendestation und wird deshalb ebenfalls zu der nicht dargestellten Auswerteeinrichtung geführt.

Der Taktgenerator 9, der Teiler 8, der Speicher 7, die Additionseinrichtung 106, das Register 110, die Multiplikationseinrichtung 12, die Summierschaltungen 16, 17, die Quadrierschaltungen 18, 20, die Summierschaltung 21, die Tiefpässe 23, 24 und der Rechner 25 bilden eine an sich bekannte early/late-Regelschleife. Zur Realisierung dieser Regelschleife wird - zusätzlich zu den oben genannten Maßnahmen - wie aus der zitierten GPS-Literaturstelle bekannt das vom Taktgenerator 9 abgegebene Taktsignal periodisch (Taktfrequenz 125 Hz) um jeweils einen Takt vor- und zurückgestellt. Dies wird von dem Rechner gesteuert.

Für die early/late-Regelschleife gilt hinsichtlich der Darstellung des Blockschaltbildes in der Fig. 2 dasselbe wie für die Costas-Regelschleife, daß nämlich die Taktsignale, die sich aus der beschriebenen Funktion zwingend ergeben, nicht dargestellt sind, da eine solche Ergänzung fachmännisches Wissen ist.

Ebenfalls fachmännisches Wissen ist es, wie die einzelnen Baugruppen realisiert werden. So kann beispielsweise die Multiplikationsschaltung 105 ein digitaler Multiplizierer oder ein ROM sein. Die Additionsschaltung 106 ist in besonders vorteilhafter Weise als Paralleladdierer realisiert, das den notwendigen Takt von dem Taktgenerator 9 erhält. Es ist weiterhin möglich - da Zahlenwerte verarbeitet werden - einige der erwähnten Baugruppen durch einen Rechner zu realisieren.

In der obigen Beschreibung war jeweils von einem PRC die Rede. Bei dem GPS ist jedem Satelliten (dies sind die Sendestationen) ein spezieller PRC zugeordnet. Zur Navigation ist es erforderlich, gleichzeitig oder zumindest kurz nacheinander die Entfernungen zu mehreren Satelliten zu messen. Dies kann bei dem neuen Empfänger in vorteilhafter Weise im Zeitmultiplex erfolgen. Hierzu ist es notwendig, daß im Empfänger die PRC für die gewünschten Satelliten gespeichert sind. Nach jeweils einer Millisekunde wird vom einen zum nächsten PRC umgeschaltet und es werden während dieser Zeiten jeweils die oben beschriebenen Regelungen durchgeführt. Das Einrasten der Regelkreise auf alle gewünschten Satelliten bleibt erhalten und die Datendemodulation der von allen Satelliten empfangenen Signale ist ohne Unterbrechung möglich.

**Patentansprüche**

1. Empfänger für modulierte bandgespreizte Trägersignale, in dem eine Synchronisation eines im Empfänger gespeicherten Kodes, der sendeseitig zur Bandspreizung verwendet wird, auf den Bandspreizungskode des empfangenen Signals erfolgt, in dem die Modulation des empfangenen Signals zurückgewonnen wird, der Regelschleifen enthält, in denen zur Regelung I- und Q-Anteile des modulierten Trägersignals erzeugt werden, in dem Mittel (104) vorgesehen sind, durch die das empfangene Signal digitalisiert wird, und zwar derart, daß der Amplitudenbereich des zu digitalisierenden Signals linear in mehrere gleiche und aneinander anschließende Teilbereiche aufgeteilt ist, daß jedem Teilbereich fortlaufend eine vorgegebene Dualzahl zugeordnet ist, daß das auf diese Weise digitalisierte Signal in einer Multipliziereinrichtung (105) mit dem im Empfänger gespeicherten Code multipliziert wird, daß die in der Multiplikationseinrichtung erzeugten Zahlenwerte in regelmäßigen Abständen in einem Addierer (106) zu dem jeweils zuletzt in einem dem Addierer nachgeschalteten Register (110) gespeicherten Zahlenwert addiert werden, daß die durch Addition erzeugten Zahlenwerte jeweils dem Register (110) zugeführt werden, daß aus den Registerständen eine erste Summe I = Z(0) + 2 Z ($\pi$) - Z (2$\pi$) und eine zweite Summe Q = -Z(0) + 2Z($\pi$/2) - 2Z-(3$\pi$/2) + Z(2$\pi$) oder Summen, die gleich einem Vielfachen oder Bruchteil hiervon sind, gebildet werden, wobei die Summanden jeweils Registerzustände zu den in Klammern angegebenen Zeitpunkten sind mit 2$\pi$ gleich der Periode des zu digitalisierenden Signals, und daß die zeitlichen Folgen der beiden Summen die I- und Q-Anteile sind, welche zur Regelung weiterverarbeitet werden.

2. Empfänger nach Anspruch 1, dadurch gekennzeichnet, daß die zeitliche Folge der Additionen angenähert doppelt so groß ist wie die Taktfrequenz des Bandspreizungskodes.

3. Empfänger nach Anspruch 2, dadurch gekennzeichnet, daß die Registerausgangswerte mit gegeneinander um eine viertel Periode des ZF-Signals verschobenen Impulsfolgen, die aus den Werten "+1" und "-1" bestehen, multipliziert (12, 13) werden.

## Claims

1. A receiver for modulated bandspread carrier signals wherein a code stored in the receiver and used at the transmitting end for bandspreading signals is synchronized with the bandspreading code of the received signal, wherein the modulation of the received signal is recovered, wherein control loops are provided for generating I and Q components of the modulated carrier signal, and wherein means (104) are provided for digitizing the received signal, such that the amplitude range of the signal to be digitized is linearly divided into a number of equal, successive subranges, that consecutive binary numbers are assigned to the subranges, that the signal so digitized is multiplied in a multiplier (105) by the code stored in the receiver, that in an adder (106), the numerical values generated in the multiplier are added at regular intervals to the respective last numerical value stored in a register (110) following the adder, that the numerical values resulting from the addition are fed to the register (110), that a first sum I = Z(0) + 2 Z ($\pi$) - Z (2$\pi$) and a second sum Q = -Z(0) + 2Z($\pi$/2) - 2Z(3$\pi$/2) + Z(2$\pi$), or sums equal to a multiple or a fraction thereof, are formed from the register contents, with the addends being the respective register contents at the instants enclosed by parantheses, where 2$\pi$ is the period of the signal to be digitized, and that the time sequences of the two sums are the I and Q components, which are processed for control purposes.

2. A receiver as claimed in claim 1, characterized in that the time sequence or rate of the additions is approximately twice as high as the repetition rate of the bandspreading code.

3. A receiver as claimed in claim 2, characterized in that the register output values are multiplied (12, 13) by pulse sequences which are separated by a quarter of a cycle of the IF signal and consist of the values "+1" and "-1".

## Revendications

1. Récepteur pour signaux modulés à spectre étalé, dans lequel une synchronisation d'un code stocké dans le récepteur qui est utilisé du côté de l'émission pour l'étalage de spectre, est mise en oeuvre sur le code d'étalage de spectre du signal reçu, et dans lequel la modulation du signal reçu est obtenue par extraction, et qui comporte des boucles de réglage dans lesquelles, à des fins de réglage, sont générés des composants I et Q du signal porteur modulé, et dans lesquelles des moyens (104) sont prévus grâce auxquels le signal reçu est numérisé et en fait de telle manière que la zone d'amplitude du signal à numériser soit divisée de manière linéaire en plusieurs zones partielles identiques et qui se suivent l'une après l'autre, et que soit affecté en séquence, à chaque zone partielle, un numéro double prédéterminé, le signal numérisé de cette manière étant multiplié par un code stocké dans le récepteur au moyen d'un dispositif de multiplication (105), les valeurs numériques générées dans le dispositif de multiplication étant additionnées, à des intervalles réguliers, dans un additionneur (106) à la valeur dans chaque cas la plus récente stockée dans un registre (110) qui suit l'additionneur, les valeurs numériques obtenues par addition étant adressées dans chaque cas au registre (110) et, à partir des états du registre, une

première somme I = Z(0) + 2Z ($\pi$) - Z (2$\pi$) et une deuxième somme Q = -Z(0) + 2Z ($\pi$/2) - 2z (3$\pi$/2) + Z (2$\pi$) ou des sommes qui sont égales à une fraction ou à un multiple desdites sommes étant formées, les opérandes de sommation des états respectifs de registre aux instants temporels indiqués entre parenthèses étant, avec 2$\pi$, égaux à la période du signal à numériser, la séquence temporelle des deux sommes étant les composants I et Q qui sont traités ultérieurement à des fins de réglage.

2. Récepteur selon la revendication 1, caractérisé en ce que la séquence temporelle de la réalisation des additions est approximativement deux fois plus grande que la valeur de la fréquence de rythme du code d'étalage de spectre.

3. Récepteur selon la revendication 2, caractérisé en ce que les valeurs de sortie de registre sont multipliées (12, 13) par des séquences d'impulsion, composées des valeurs "+1" et "-1", décalées l'une par rapport à l'autre d'un quart de période du signal à fréquence intermédiaire.

Amplitude

Fig.1a

Trägerschwingung
(1GHz)

Amplitude

Fig.1b

Pseudostatistischer Kode(PRC)
(Takt 1MHz)

Amplitude

Fig.1c

Trägersignal

Auswerteeinrichtung (Daten)

Auswerteeinrichtung (Entfernungsmessung)

| Block | Label |
|---|---|
| 1 | (Antenne) |
| 2 | HF – Teil |
| 3 | ZF – Teil |
| 104 | Digitalisierung |
| 105 | Multiplikation (PRC) |
| 106 | Addierer |
| 7 | Speicher |
| 8 | : 2 |
| 9 | Takt-generator |
| 110 | Register |
| 12 | Multiplikation |
| 13 | Multiplikation |
| 15 | Takt-generator 5 kHz |
| — | $\frac{\pi}{2}$ |
| 16 | $\Sigma\,1$ |
| 17 | $\Sigma\,2$ |
| 18 | Quadrieren |
| 19 | Multiplikation |
| 20 | Quadrieren |
| 21 | Summieren |
| 22 | |
| 23 | TP |
| 24 | TP |
| 25 | Rechner |
| 32 | TP |

Fig.2

Amplitude

moduliertes Trägersignal in ZF-Lage

t

FIG 3a

Bei der Digitalisierung erzeugte
Zahlenwerte (schematische Darstellung)

digitalisiertes Signal

5

0

t

Fig 3b

Registerstand

$\frac{\pi}{2}$    $\pi$    $\frac{3\pi}{2}$    $2\pi$    Fig 3c    t